# EUROPÄISCHE PATENTSCHRIFT

(11) **EP 1 910 134 B1**
(45) Veröffentlichungstag und Bekanntmachung des Hinweises auf die Patenterteilung: **15.05.2013**
(21) Anmeldenummer: 06775734.4
(22) Anmeldetag: 19.07.2006
(51) Int. Cl.: B60R 16/02, B60R 25/00

(54) **IDENTIFIKATIONS- UND/ODER SCHLIESSSYSTEM ZUR IDENTIFIKATION UND/ODER FREIGABE EINES TECHNISCHEN SYSTEMS UND VERFAHREN ZU SEINEM BETRIEB**
IDENTIFYING AND/OR LOCKING SYSTEM FOR IDENTIFYING AND/OR UNBLOCKING A TECHNICAL SYSTEM, AND METHOD FOR THE OPERATION THEREOF
SYSTEME D'IDENTIFICATION ET/OU DE FERMETURE SERVANT A IDENTIFIER ET/OU DEVERROUILLER UN SYSTEME TECHNIQUE ET PROCEDE DE FONCTIONNEMENT DUDIT SYSTEME

(30) Priorität: 19.07.2005 DE 102005033628; 20.07.2005 DE 102005034477
(43) Veröffentlichungstag der Anmeldung: 16.04.2008
(73) Patentinhaber: baimos technologies GmbH, 80807 München (DE)
(72) Erfinder: SPANGENBERG, Philip Paul, 85748 Garching (DE); WEITZEL, Markus Michael, 85635 Holzkirchen (DE); METZKE, Robert, 83278 Traunstein (DE); WOLF, Sebastian, 80802 München (DE)
(74) Vertreter: Heselberger, Johannes
(86) Internationale Anmeldenummer: PCT/DE2006/001278
(87) Internationale Veröffentlichungsnummer: WO 2007/009453

(56) Entgegenhaltungen:
- EP-A2- 0 913 979
- DE-A1- 10 142 967
- DE-A1- 10 237 831

## Beschreibung

Die Erfindung betrifft ein Identifikations- und/oder Schließsystem, im Folgenden kurz Identifikationssystem genannt, auf der Basis einer Übermittlung vorzugsweise digitaler Daten, die von einer empfangenden Einheit zur Authentifizierung überprüft werden. Derartige Systeme können vorzugsweise für die Organisation von Zugangs- und Nutzungsberechtigungen in Verbindung mit technischen Systemen, insbesondere für das Betreiben von Kraftfahrzeugen, Verwendung finden. Identifikationssysteme im Sinne der Erfindung umfassen daher sowohl Systeme zur Koordination des Zutritts zu räumlich abgetrennten Bereichen als auch Systeme zur Freigabe oder Sperrung technischer Funktionalitäten.

Neben herkömmlichen Zugangs- und Schließsystemen, in denen eine Zugangs- und Nutzungsberechtigung zwangsläufig aus dem Besitz eines Schlüssels gefolgert wird, der bei einer Zusammenführung mit einer als Schloss fungierenden Einheit den Zugang ermöglicht, haben sich verschiedene Identifikations- und Schließsysteme etabliert, die auf einer elektronischen und/oder optischen Datenübertragung basieren. Der zu übertragende Datensatz ist dabei auf einer Speichereinheit hinterlegt und wird aktiv oder passiv abgerufen. Die Speichereinheit mit dem hinterlegten Datensatz übernimmt dabei im Wesentlichen die Funktion eines herkömmlichen Schlüssel. Lediglich die Authentifizierung des Schlüssels erfolgt nicht an Hand geometrischer Merkmale sondern durch eine Überprüfung der übertragenen Daten.

In Zusammenhang mit Kraftfahrzeugen haben sich sogenannte Funkschlüssel-Systeme durchgesetzt, die teilweise als Ergänzung herkömmlicher Schlüssel dienen und im Wesentlichen Komfortfunktionen erfüllen, indem das Fahrzeug bei Annäherung des scheinbar oder tatsächlich Berechtigten bereits auf den Betrieb vorbereitet bzw. geöffnet wird, bevor der Schlüssel in tatsächlichen Kontakt mit einer als Schloss fungierenden Einheit gelangt.

Daneben existieren bereits Keyless Entry/Go-Systeme, die ganz ohne mechanischen Schlüssel auskommen. In beiden Fällen umfasst ein System zum Entsperren verriegelter Türen einen passiven Empfänger im Fahrzeug und einen aktiven Sender an einem vom Fahrer mitgeführten elektronischen Türöffner, der über Funk oder durch optische Datenübertragung mit dem Empfänger im Fahrzeug kommuniziert. Im Zuge dieser Kommunikation wird gewöhnlich ein Abfrageprotokoll abgearbeitet, das die Übertragung eines Codes vom Sender zum Empfänger und den Vergleich dieses Codes mit einem im Fahrzeug gespeicherten Code umfasst. Bei Übereinstimmung des übertragenen Codes mit dem gespeicherten Code wird auf die Zugangs- und Nutzungsberechtigung des Trägers des Senders geschlossen und das Fahrzeug entriegelt.

Die europäische Patentanmeldung EP 0 913 979 A2 bezieht sich auf ein Verfahren zum Betrieb eines Mobiltelefons als Fernsteuerung. Dieses Dokument offenbart den Oberbegriff der unabhängigen Ansprüche. Das Mobiltelefon dient der Erzeugung eines Freigabesignals, welches wiederum das Öffnen einer Tür, eines Garagentors, einer Zentralverriegelung, etc. verursacht. Weitere Zugangskontrollsysteme für Kraftfahrzeuge sind in den Offenlegungsschriften DE 101 42 967 A1 und DE 102 37 831 A1 offenbart.

Derartige Systeme weisen eine Reihe von Nachteilen auf. Durch die feste Verbindung der Speichereinheit mit einem Sender und evtl. einem herkömmlichen Schlüssel sind einer Miniaturisierung Grenzen gesetzt. Überdies ist aufgrund der physischen Verbundenheit bzw. Kopplung der Komponenten eine einfache und schnelle Übertragung des Schlüssels auf digitalem Wege unmöglich.

Die einmalige Hinterlegung des zu übertragenden Datensatzes in der Speichereinheit befähigt einen Besitzer unabhängig von seiner tatsächlichen Berechtigung häufig zur erfolgreichen Benutzung des auf derartige Weise gesicherten Systems, beispielsweise zur unbefugten Benutzung bzw. Entwendung von Kraftfahrzeugen. Die drahtlose Datenübertragung ist darüber hinaus insbesondere bei funkbasierten Systemen stets mit der Gefahr einer missbräuchlichen Aufzeichnung der übermittelten Daten in der näheren Umgebung des benutzten Identifikationssystems verbunden. Da dies oft unbemerkt geschieht, werden keine Maßnahmen ergriffen, um einer missbräuchlichen Verwendung des Zugangscodes entgegen zu wirken. Auf diese Weise können daher funktionierende "Zweitschlüssel" für Keyless Entry/Go-Systeme erstellt werden, deren Verbreitung nicht beeinflusst werden kann. In solchen Fällen ist ein Austausch des zu versendenden Datensatzes erforderlich, was teilweise relativ aufwändig ist. Ebenso ist es nicht möglich, einen solchen Schlüssel in seiner zeitlichen Gültigkeit zu begrenzen, da eine Aktualisierung des Gültigkeitsintervalls ebenfalls einen unverhältnismäßig hohen Aufwand mit sich bringen würde.

Aufgabe der vorliegenden Erfindung ist es, ein Identifikationssystem anzugeben, welches die Nachteile des Standes der Technik vermeidet. Es soll insbesondere in Zugangs- und Schließsystemen verwendbar sein und sich durch einen verbesserten Schutz vor missbräuchlicher Benutzung auszeichnen.

Die Aufgabe wird gelöst durch ein Identifikationssystem mit den Merkmalen von Anspruch 1.

Die Erfindung besteht im Wesentlichen aus einem Identifikationssystem zur berechtigungsabhängigen Nutzung eines technischen Systems, das mindestens eine steuernde Empfangseinheit umfasst, die in Abhängigkeit von einem empfangenen Signal mindestens eine Steuerfunktion ausführt, und das mindestens eine mobile Sendeeinheit umfasst, die zur Versendung eines Signals, das die steuernde Empfangseinheit zur Ausführung der Steuerfunktion veranlasst, geeignet ist, wobei die steuernde Empfangseinheit über Mittel verfügt, um zu prüfen, ob ein empfangenes Signal die Ausführung einer Steuerfunktion auslösen soll, und die mobile Sendeeinheit über Mittel verfügt, die eine Festlegung, Änderung und Speicherung des an die steuernde Empfangseinheit zu versendenden Signals ermöglichen.

Vorteilhafterweise verfügt die mobile Sendeeinheit über Mittel zum Empfang von Signalen, durch die eine Festlegung, Änderung und Speicherung des an die steuernde Empfangseinheit zu versendenden Signals erfolgen kann. Die Festlegung, Änderung und Speicherung des an die steuernde Empfangseinheit zu versendenden Signals kann jederzeit und mehrfach vorgenommen werden. Dadurch können die zu übermittelnden Signale schnell per Funk und ohne großen Aufwand an sich ändernde Gegebenheiten angepasst werden.

Vorteilhafterweise ist die mobile Sendeeinheit Bestandteil eines Mobiltelefons, eines PDA (Personal Digital Assistant), eines SmartPhones oder eines ähnlichen Gerätes. Auf diese Weise kann der gesamte Funktionsumfang derartiger Geräte bei der Versendung der Signale genutzt werden.

Eine vorteilhafte Anwendung der Erfindung ergibt sich, wenn die steuernde Empfangseinheit in ein Fahrzeug integriert ist und mindestens eine Steuerfunktion ausgeführt werden muss, um das Fahrzeug in Betrieb setzen zu können. Beispielsweise kann die von der steuernden Empfangseinheit ausgeführte Steuerfunktion eine Ent- oder Verriegelung der Fahrzeugtüren, eine Freigabe oder Sperrung des Zündschlosses, eine Freigabe oder Sperrung einer Lenkradsperre, eine Freigabe oder Sperrung einer Wegfahrsperre und/oder eine Freigabe oder Sperrung eines Motorsteuergerätes sein. Auf diese Weise wird das erfindungsgemäße System zu einem leistungsfähigen Keyless Entry/Go-System.

Eine hohe Sicherheit gegenüber missbräuchlicher Benutzung ergibt sich, wenn das von der mobilen Sendeeinheit zur steuernden Empfangseinheit übertragene Signal einen Code enthält, der zur Authentifikation des übermittelten Signals verwendet werden kann. Nur bei erfolgreicher Authentifikation verwendet die steuernde Empfangseinheit empfangene Informationen, um eine Steuerfunktion auszuführen, die in der bereits beschriebenen Freigabe eines bestimmten Systems eines Fahrzeuges bestehen kann. Bei fehlgeschlagener Authentifikation erfolgt keine Freigabe und das Fahrzeug kann nicht in Betrieb gesetzt werden.

Dem übertragenen Signal bzw. der dieses Signal aussendenden mobilen Sendeeinheit kommt somit die Funktion eines elektronischen, vorzugsweise digitalen, Schlüssels zu.

Das erfindungsgemäße System entfaltet seine volle Leistungsfähigkeit, wenn eine zentrale Rechnereinheit umfasst ist, welche die an die steuernde Empfangseinheit zu versendenden Signale festlegt und an die mobile Sendeeinheit versendet, und die mobile Sendeeinheit über Mittel verfügt, um die von der zentralen Rechnereinheit versendeten Signale zu empfangen und zu speichern. Insbesondere Mobiltelefone sind dafür geeignet. Vorteilhafterweise enthält das von der zentralen Rechnereinheit versendete Signal einen digitalen Datensatz. Dieser Datensatz kann mehrere verschlüsselte Bereiche umfassen, die in der steuernden Empfangseinheit und/oder in der mobilen Sendeeinheit entschlüsselt werden können. Beispielhaft wird dies anhand des Öffnens eines Fahrzeuges dargestellt. Ein digitaler Schlüssel wird auf einem Server, also einer zentralen Rechnereinheit, erzeugt, an eine mobile Sendeeinheit eines Mobiltelefons übertragen und dort gespeichert. Auf dem Mobiltelefon wird der digitale Schlüssel partiell entschlüsselt und ganz oder teilweise, also noch teilweise verschlüsselt, an ein Steuergerät im Fahrzeug, also eine steuernde Empfangseinheit, übertragen. Das Steuergerät entschlüsselt nunmehr noch den verschlüsselt übertragenen Teil des digitalen Schlüssels und führt daraufhin Aktionen aus, die zum Entsperren der Fahrzeugtüren führen.

Das von der mobilen Sendeeinheit übertragene Signal enthählt Informationen über eine zeitabhängige Gültigkeit der übermittelten Daten, aus denen die Ausführung einer Steuerfunktion nur dann abgeleitet werden kann, wenn die Übermittlung des von der mobilen Sendeeinheit übertragenen Signals in einem gültigen Zeitfenster erfolgt. Auf diese Weise lassen sich Identifikationssysteme mit besonders hohen Sicherheitsstandards realisieren. Einmal übermittelte digitale Schlüssel verlieren nach einer festgelegten Zeit automatisch ihre Gültigkeit. Damit werden auch mit dem Verlust einer mobilen Sendeeinheit verbundene Risiken, beispielsweise nach Verlieren eines Mobiltelefons, weitgehend reduziert. Unberechtigt abgefangene Daten, die von der mobilen Sendeeinheit übertragen wurden, verlieren ebenfalls nach einer festgelegten Zeit ihren Wert als Schlüsselersatz. Ebenso ist es möglich, Schlüssel zu übertragen, die bereits nach einer einmaligen Anwendung ihre Gültigkeit verlieren.

Besonders vorteilhaft ist es, wenn die Möglichkeit besteht, einem existierenden digitalen Schlüssel dessen Gültigkeit zu entziehen, diesen also beispielsweise zu löschen. Hierdurch lässt sich ein erfindungsgemäßes System mit einem wesentlich verbesserten Sicherheitsstandard realisieren, da durch Diebstahl einer zum System gehörenden Komponente entstandene Gefahren auch nachträglich entschärft werden können.

In einer weiteren vorteilhaften Ausgestaltung eines erfindungsgemäßen Systems sind Mittel vorgesehen, die es ermöglichen, in das zu übermittelnde Signal Informationen einzubeziehen, die fahrerspezifische Einstellungen am Fahrzeug betreffen. Je nach Automatisierungs- und Ausstattungsgrad können so Informationen über bevorzugte Navigationspunkte, Radioeinstellungen, Sitzeinstellungen, Spiegeleinstellungen und/oder Einstellungen der Klimaanlage abgelegt und/oder in das zur steuernden Empfangseinheit übermittelte Signal einbezogen werden.

Vorteilhafterweise verfügt dazu die steuernde Empfangseinheit über Möglichkeiten zur Datenübermittlung an die mobile Sendeeinheit und/oder die zentrale Rechnereinheit. In diesem Fall können die angesprochenen Einstellungen am Fahrzeug ausgelesen und in ein später von der mobilen Sendeeinheit übermitteltes Signal einbezogen werden. Dazu können diese Einstellungen betreffende Daten auf der zentralen Rechnereinheit oder der mobilen Sendeeinheit abgelegt oder verändert werden. Alternativ können derartige Daten ohne vorheriges Auslesen an der zentralen Rechnereinheit oder der mobilen Sendeeinheit erstellt werden.

Die Erfindung besteht ebenso in einem Verfahren zum Betrieb eines Identifikations- und/oder Schließsystems zur Identifikation und/oder Freigabe eines technischen Systems, welches mindestens eine steuernde Empfangseinheit umfasst, die in Abhängigkeit von einem empfangenen Signal mindestens eine Steuerfunktion ausführen kann, und das mindestens eine mobile Sendeeinheit umfasst, wobei die steuernde Empfangseinheit über Mittel verfügt, um zu prüfen, ob ein empfangenes Signal die Ausführung einer Steuerfunktion auslösen soll, und die mobile Sendeeinheit über Mittel verfügt, die eine Festlegung, Änderung und Speicherung des an die steuernde Empfangseinheit zu versendenden Signals ermöglichen, wobei von einer zentralen Rechnereinheit ein digitaler Schlüssel erzeugt, eine Verbindung zwischen der zentralen Rechnereinheit und der mobilen Sendeeinheit aufgebaut, eine Übertragung des digitalen Schlüssels von der zentralen Rechnereinheit zur mobilen Sendeeinheit vorgenommen, eine Verbindung zwischen der mobilen Sendeeinheit und der steuernden Empfangseinheit aufgebaut, eine Übertragung des digitalen Schlüssels von der mobilen Sendeeinheit zur steuernden Empfangseinheit vorgenommen und von der steuernden Empfangseinheit mindestens eine Steuerfunktion ausgeführt wird, nachdem der digitale Schlüssel mindestens eine Prüfung eines Kriteriums bestanden hat. Das zu prüfende Kriterium kann beispielsweise eine befristete oder unbefristete Gültigkeit eines digitalen Schlüssels, eine Authentifizierung eines mobilen Endgerätes einschließlich dessen Benutzers sowie eine Prüfung der Zulässigkeit einer bestimmten Kombination eines mobilen Endgerätes mit einer steuernden Empfangseinheit betreffen.

Des Weiteren ist es vorteilhaft, wenn die steuernde .Empfangseinheit auch über Sendemittel verfügt, also beidseitig Empfangs- und Sendeeinheiten zur Verfügung stehen. Somit kann zwischen den Sende- und Empfangseinheiten eine sichere bidirektionale Kommunikation aufgebaut werden, wobei auf der Seite des mobilen Endgerätes und der Seite der steuernden Empfangseinheit am zu schützenden Objekt jeweils Identifikationseinheiten verwendet werden können.

Die Verwendung eines erfindungsgemäßen Systems ermöglicht eine Reihe von Einsatzvarianten. So können Aktionen automatisch oder manuell ausgelöst werden. Die Auslösung kann, sobald eine Verbindung besteht, nicht mehr besteht oder durch andere auslösende Ereignisse, ein- oder mehrmalig erfolgen. Verwendete digitale Schlüssel können zeitlich begrenzt oder unbegrenzt gelten und der digitale Schlüssel kann mit wenigstens einem dem zu schützenden Objekt eindeutig zuordenbaren Identifikationsmerkmal verschlüsselt sein, so dass der digitale Schlüssel nur in Verbindung mit diesem Objekt verwendet werden kann.

An einem Ausführungsbeispiel wird die Erfindung näher erläutert. Die zugehörigen Figuren zeigen:
Fig. 1 eine Blockdarstellung der Grundkomponenten eines erfindungsgemäß ausgeführten Schließsystems;
Fig. 2 eine schematische Darstellung des Zusammenwirkens der Komponenten eines erfindungsgemäßen Systems unter Verwendung eines Mobiltelefons;
Fig. 3 einen Ablaufplan eines Programms zur Durchführung des erfindungsgemäßen Verfahrens am Beispiel der Inbetriebnahme eines Fahrzeuges;
Fig. 4 eine Darstellung des Systems Carrier - Key.

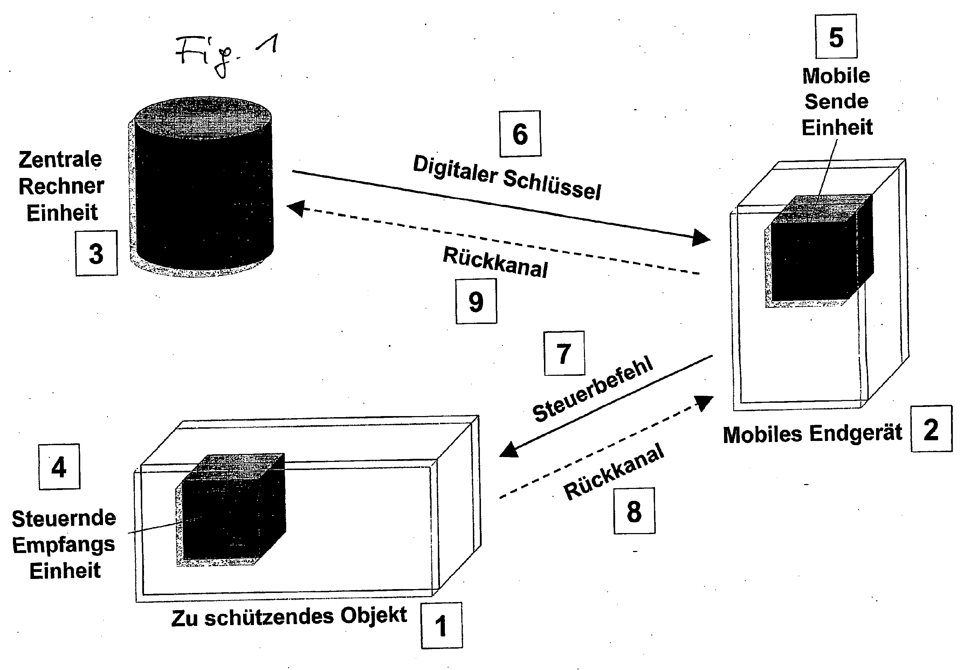

Fig. 1 zeigt eine Blockdarstellung der Grundkomponenten eines erfindungsgemäß ausgeführten Identifikationssystems zum Schutz eines zu schützenden Objektes 1. Das System umfasst ein mobiles Endgerät 2, eine zentrale Rechnereinheit 3 und eine dem zu schützenden Objekt 1 zugeordnete steuernde Empfangseinheit 4. Das mobile Endgerät 2 verfügt über eine mobile Sendeeinheit 5. Zwischen der zentralen Rechnereinheit 3 und der mobilen Sendeeinheit 5 kann eine Verbindung 6 aufgebaut werden, um Daten, also beispielsweise einen digitalen Schlüssel, von der zentralen Rechnereinheit 3 zum mobilen Endgerät 2 übertragen zu können. Diese Verbindung 6 kann drahtlos oder drahtgebunden sein. Zwischen der mobilen Sendeeinheit 5 und der steuernden Empfangseinheit 4 kann ebenfalls eine Verbindung 7 aufgebaut werden, um Daten, also beispielsweise einen digitalen Schlüssel oder Teile davon oder einen Steuerbefehl, vom mobilen Endgerät 2 zum zu schützenden Objekt 1 übertragen zu können. Diese Verbindung 7 erfolgt drahtlos oder drahtgebunden zwischen der mobilen Sendeeinheit 5 des mobilen Endgerätes 2 und der steuernden Empfangseinheit 4 des zu schützenden Objektes 1. Vorteilhafterweise verfügt die steuernde Empfangseinheit 4 über Sendemittel und die mobile Sendeeinheit 5 über Empfangsmittel, um die Verbindung 7 zwischen der mobilen Sendeeinheit 5 und der steuernden Empfangseinheit 4 bidirektional aufbauen zu können. Der dadurch zur Verfügung stehende Rückkanal 8 kann zur Erhöhung der Sicherheit der Verbindung benutzt werden. Aus dem gleichen Grund ist es vorteilhaft, wenn die Verbindung 6 zwischen der mobilen Sendeeinheit 5 und der zentralen Rechnereinheit 3 bidirektional aufgebaut wird. Der dadurch zur Verfügung stehende Rückkanal 9 kann zur Erhöhung der Sicherheit dieser Verbindung benutzt werden.

Das vorgestellte System lässt sich beispielhaft in Zusammenhang mit Kraftfahrzeugen nutzen. Ein Kraftfahrzeug verfügt über verschiedene freizugebende Systeme. Dazu zählen Fahrzeugtüren, das Zündschloss, eine Lenkradsperre, eine Wegfahrsperre und ein Motorsteuergerät. Die Freigabe dieser Systeme erfolgt durch eine in das Fahrzeug integrierte steuernde Empfangseinheit 4, wenn diese ein Signal empfängt, dessen Prüfung ergibt, dass die Freigabe der genannten Systeme erfolgen soll. Ohne Freigabe dieser Systeme ist ein Betrieb des Fahrzeuges unmöglich. Die Prüfung des Signals umfasst die Authentifikation des übermittelten Signals einschließlich einer zeitlich begrenzten Gültigkeit. Kann das Signal nicht authentifiziert werden oder ist seine Gültigkeitsdauer verstrichen, kommt es zu keiner weiteren Aktivität der steuernden Empfangseinheit 4.

Die Übertragung des Signals zur steuernden Empfangseinheit 4 erfolgt durch eine mobile Sendeeinheit 5, insbesondere einen Bluetoothchip, in einem entsprechend ausgelegten Mobiltelefon. Das erfindungsgemäße System umfasst also mindestens eine mobile Sendeeinheit 5, mit deren Hilfe der Benutzer Zugang zum Fahrzeug erhält. Im Unterschied zu herkömmlichen Schließsystemen verfügt die mobile Sendeeinheit 5 im vorliegenden Beispiel über Mittel zum Empfang von Signalen, durch die eine Festlegung, Änderung und Speicherung des an die steuernde Empfangseinheit 4 zu versendenden Signals erfolgen kann. Diese Mittel werden in erster Linie durch die Empfängereinheit und einen Datenspeicher des Mobiltelefons verkörpert. Alternativ können andere mobile Endgeräte in ein erfindungsgemäßes System einbezogen werden.

Die Verbindung zwischen der mobilen Sendeeinheit 5 des Mobiltelefons und der steuernden Empfangseinheit 4 im Fahrzeug erfolgt über eine drahtlose Verbindungstechnik wie Bluetooth, WLAN oder andere. Zur Erhöhung der Sicherheit erfolgt die Übertragung der Daten über die drahtlose Verbindung in verschlüsselter Form. Alternativ werden codierte Signale versendet, die dem Stand der Technik entsprechend sehr stark verschlüsselt sind.

Nachdem die mobile Sendeeinheit 5 in die Reichweite der steuernden Empfangseinheit 4 gelangt ist, kann automatisch ein Verbindungsaufbau vorgenommen werden. Alternativ kann dieser Verbindungsaufbau manuell initiiert werden.

Die Übermittlung von in der mobilen Sendeeinheit 5 (Mobiltelefon) hinterlegten Daten kann nach erfolgtem Verbindungsaufbau ebenfalls automatisch oder manuell bewirkt werden. Wird das Mobiltelefon aus der Reichweite der steuernden Empfangseinheit 4 entfernt, erfolgt eine automatische Deaktivierung des Systems. Alternativ kann eine Deaktivierung jederzeit durch Einflussnahme des Benutzers sowohl am Mobiltelefon als auch an Bedienelementen des Fahrzeuges erfolgen.

Das versendete Signal enthält digitale Informationen, die einerseits der Authentifikation des Signals selbst dienen und andererseits Anweisungen über von der steuernden Empfangseinheit 4 auszuführende Funktionen darstellen. Kann das empfangene Signal erfolgreich authentifiziert werden, kommt es zur Verwertung der restlichen im übertragenen Signal enthaltenen Informationen. Das Fahrzeug wird zum Betrieb freigegeben.

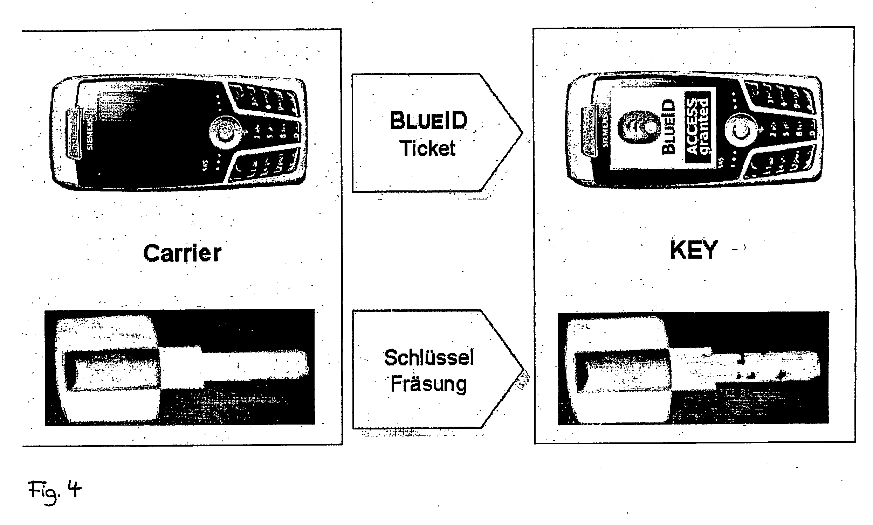

Auf diese Weise fungiert das verwendete Mobiltelefon zusammen mit dem zu versendenden Signal als digitaler Schlüssel, wobei der hinterlegte Datensatz den Schlüssel analog einer herkömmlichen Fräsung spezifiziert und das Mobiltelefon gewissermaßen mit einem Schlüsselrohling verglichen werden kann. Der digitale Schlüssel kann zeitlich begrenzt oder unbegrenzt gelten. Eine zeitliche Begrenzung ist mit einer besonders hohen Sicherheit verbunden. Diese Zusammenhänge werden in Fig. 4 dargestellt.

Der digitale Schlüssel kann durch Speicherung eines Datensatzes, der im Folgenden teilweise ebenfalls als digitaler Schlüssel bezeichnet wird, auf dem Mobiltelefon realisiert werden. Im vorliegenden Beispiel wird der Datensatz von einem Server, der eine zentrale Rechnereinheit 3 im Sinne der Erfindung verkörpert, erzeugt und zum Mobiltelefon übertragen. Für diese Übertragung eignen sich drahtgebundene und drahtlose Systeme, beispielsweise GPRS, UMTS, MMS, SMS, WLAN oder ähnliche Verbindungstechniken. Alternativ kann der digitale Schlüssel auch direkt mit einem verwendeten mobilen Endgerät 2 vom Server 3 heruntergeladen werden.

Die einzelnen Teile des digitalen Schlüssels können auf unterschiedliche Weise verschlüsselt werden, wodurch eine einfache Trennung zwischen einem Datenteil, welcher der Authentifikation des Signals dient, und einem Datenteil, welcher ausführbare Anweisungen enthält, ermöglicht wird.

Dieses erfindungsgemäße System zeichnet sich durch eine große Vielseitigkeit aus. Der digitale Schlüssel kann mit einer dem verwendeten mobilen Endgerät, also vorliegend dem Mobiltelefon, eindeutig zuzuordnenden Nummer (UIN) verschlüsselt werden, wodurch der digitale Schlüssel nur in Verbindung mit diesem Endgerät verwendet werden kann. Eine ähnliche Zuordnung kann zwischen dem digitalen Schlüssel und einem einzelnen Fahrzeug, einer Fahrzeugflotte oder einem Fahrzeugtyp erfolgen.

Beispielsweise können mehrere digitale Schlüssel, die jeweils für die Benutzung eines bestimmten Fahrzeuges vorgesehen sind, auf mehreren mobilen Endgerät. Auf diese Weise kann durch einmalige Schlüsselvergabe eine komplizierte Berechtigungsstruktur, beispielsweise innerhalb von Firmen, geregelt werden.

Des Weiteren sind Sensoren enthalten oder Mittel zum Auslesen der Stellung verschiedener Aktuatoren vorhanden, die es ermöglichen, Informationen zu gewinnen und in das zu übermittelnde Signal einzubeziehen, die fahrerspezifische Einstellungen am Fahrzeug betreffen. Dies sind Informationen über bevorzugte Navigationspunkte, Radioeinstellungen, Sitzeinstellungen, Spiegeleinstellungen und Einstellungen der Klimaanlage.

Die Vielseitigkeit des erfindungsgemäßen Identifikationssystems wird anhand der folgenden Szenarien deutlich.

Im Rahmen einer Autovermietung möchte eine Person ein Fahrzeug für eine bestimmte Zeit mieten. Das Auto wird bei einer Autovermietung bestellt. Die Entscheidung für die Verwendung eines digitalen Schlüssels wird getroffen. Der digitale Schlüssel, auch Ticket genannt, wird an ein mobiles Endgerät im Besitz der mietenden Person, beispielsweise deren Mobiltelefon, verschickt. Die Person kann das Mobiltelefon mit gültigem Ticket als Autoschlüssel verwenden.

Auch für die Organisation eines Fuhrparks ist das System verwendbar. Möchte ein Unternehmen sein Flottenmanagement über digitale Schlüssel steuern, werden den Fahrern die Schlüssel für den Zugang zu den benötigten Fahrzeugen auf deren Mobiltelefone geschickt. Die Schlüssel sind für eine bestimmte Dauer gültig, laufen anschließend ab und müssen nicht zurück gebracht werden.

Auch im privaten Bereich sind Anwendungen denkbar. Möchte eine Privatperson einen digitalen Fahrzeugschlüssel für das Privatfahrzeug verwenden, bestellt sie über das Internet ein Ticket. Dieses wird auf ein angegebenes Mobiltelefon verschickt und steht unmittelbar zur Verfügung.

Ähnlich vielseitig ist das erfindungsgemäße Identifikationssystem für eine Zugangsregulierung zu Gebäuden verwendbar. Möchte eine Person beispielsweise für eine bestimmte Zeit ein Hotelzimmer mieten, wird das Zimmer im Hotel bestellt. Die Entscheidung für die Verwendung eines digitalen Schlüssels wird getroffen. Der digitale Schlüssel, auch Ticket genannt, wird an ein mobiles Endgerät im Besitz der mietenden Person, beispielsweise deren Mobiltelefon, verschickt. Die Person kann das Mobiltelefon mit gültigem Ticket als Hotel- und Zimmerschlüssel verwenden.

Auch für die Organisation eines Zugangs zu Firmengebäuden ist das System verwendbar. Möchte ein Unternehmen seinen Werkschutz über digitale Schlüssel steuern, werden den Mitarbeitern und/oder Besuchern Schlüssel für den Zugang zu den bestimmten Räumen oder Gebäuden auf deren Mobiltelefone geschickt. Die Schlüssel sind für eine bestimmte Dauer gültig, laufen anschließend ab und müssen nicht zurück gebracht werden.

Auch im privaten Bereich sind Anwendungen denkbar. Möchte eine Privatperson einen digitalen Haustürschlüssel für das eigene Haus verwenden, bestellt sie über das Internet ein Ticket. Dieses wird auf ein angegebenes Mobiltelefon verschickt und steht unmittelbar zur Verfügung.

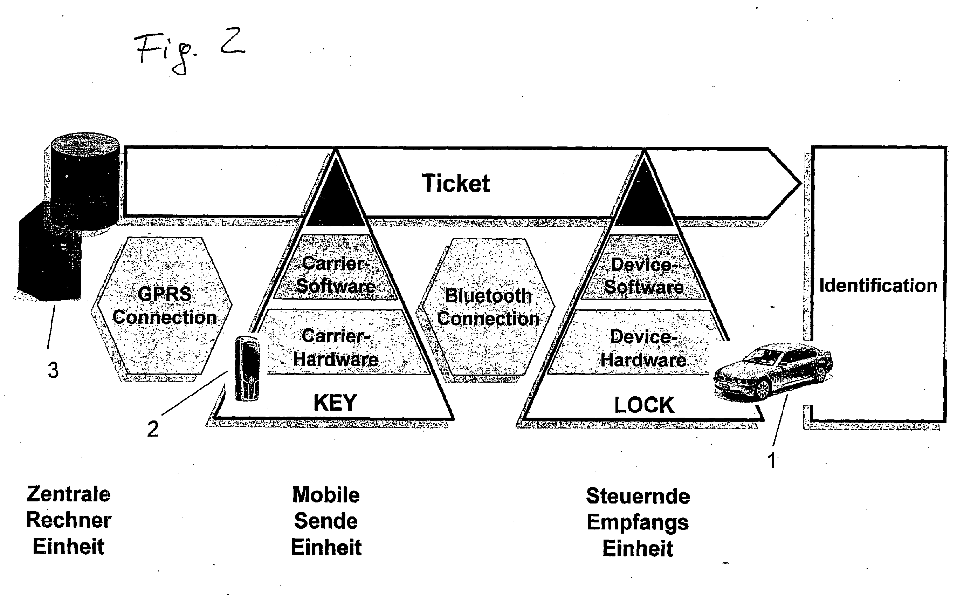

Figur 2 zeigt eine schematische Darstellung des Zusammenwirkens der Komponenten eines erfindungsgemäßen Systems unter Verwendung eines Mobiltelefons. Das Ziel des Zusammenwirkens besteht darin, von einer zentralen Rechnereinheit 3 aus der Zugang zu einem zu schützenden Objekt 1 (Auto) zu regeln. Das wird über die Vergabe eines digitalen Schlüssels, auch Ticket genannt, vermittelt und schließt eine Identitätsprüfung ein. Die Zugangsregelung erfolgt durch das Zusammenspiel der zentralen Rechnereinheit mit zwei weiteren Hardware-Komponenten, einer Carrier-Hardware (Träger-Hardware) in Form eines mobilen Endgerätes 2 und einer Device-Hardware in Form einer mit dem zu schützenden Objekt verbundenen steuernden Empfangseinheit. Die steuernde Empfangseinheit verfügt über entsprechende Device-Software und das mobile Endgerät über entsprechende Carrier-Software, um miteinander über eine Bluetooth-Verbindung kommunizieren zu können. Die Device-Software ist außerdem zur Ausführung von zugangsverschaffenden Aktionen in der Lage. Die Carrier-Software regelt außerdem die Kommunikation des mobilen Endgerätes mit der zentralen Rechnereinheit, beispielsweise über eine GPRS-Verbindung.

Im Automobil-Szenario repräsentiert das Mobiltelefon des Fahrers die Carrier-Komponente (Trägermedium) und das Fahrzeug die Device-Komponente (Bedienmedium). Beide müssen über geeignete Software, beispielsweise BLUEID-Software, verfügen, um als KEY und LOCK ein Ticket, in diesem Fall ein BLUEID-Ticket verarbeiten zu können. Dieses liefert dabei Informationen, welche - durch Kommunikation von KEY und LOCK, also dem mobilen Endgerät und der steuernden Empfangseinheit, über eine Datenschnittstelle - in die Funktionalität der Fahreridentifikation umgesetzt werden.

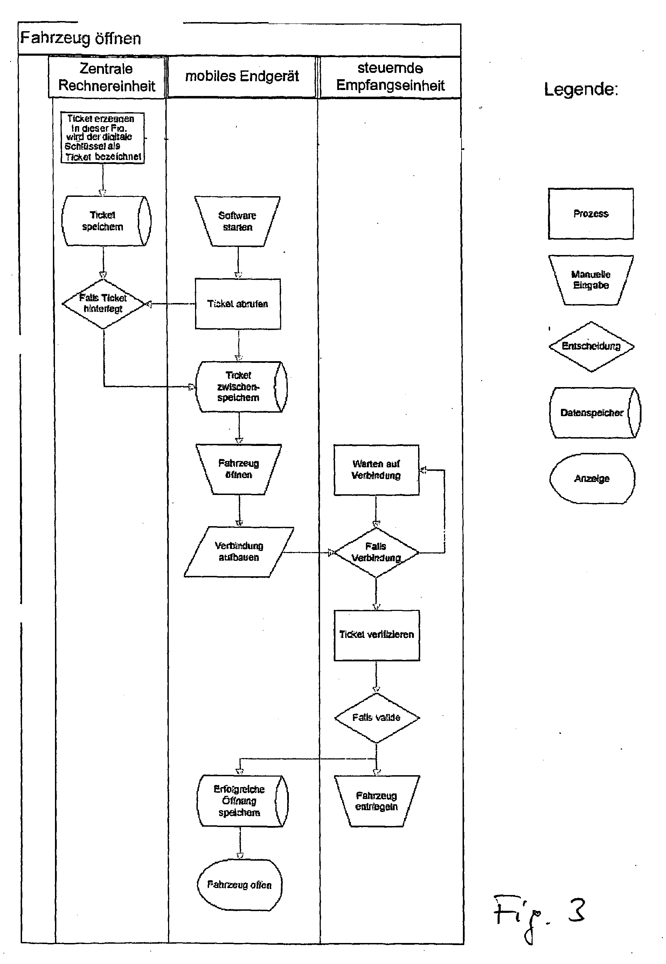

Figur 3 zeigt einen Ablaufplan eines Programms zur Durchführung des erfindungsgemäßen Verfahrens am Beispiel der Inbetriebnahme eines Fahrzeuges. Der Ablaufplan ist dreispaltig aufgebaut, wobei jede Spalte einer der Hardware-Komponenten zentrale Rechnereinheit, mobiles Endgerät und steuernde Empfangseinheit zugeordnet ist. Die Kommunikation über die Spaltengrenzen hinweg erfolgt über die bereits beschriebenen Verbindungen zwischen den Komponenten, die vorliegend bidirektional aufgebaut sind.

In der zentralen Rechnereinheit werden Tickets oder digitale Schlüssel erzeugt und in einem Speicher abgelegt.

Das mobile Endgerät einschließlich der darauf gespeicherten Software wird manuell gestartet. Bei der zentralen Rechnereinheit wird ein Ticket abgerufen und in einem Zwischenspeicher auf dem mobilen Endgerät abgelegt. Erfolgt am mobilen Endgerät eine Eingabe, die das Öffnen des Fahrzeuges bewirken soll, wird eine Verbindung zur steuernden Empfangseinheit im Fahrzeug aufgebaut.

Erkennt die Software der steuernden Empfangseinheit eine bestehende Verbindung zum mobilen Endgerät, wird das Ticket verifiziert und im Fall eines gültigen Tickets das Fahrzeug entriegelt. Gleichzeitig wird eine Information an das mobile Endgerät übermittelt, aus der die erfolgte Öffnung des Fahrzeuges gefolgert werden kann. Am mobilen Endgerät erfolgt eine Statusanzeige, die dem Nutzer des mobilen Endgerätes den Öffnungszustand des Fahrzeuges anzeigt.

### Bezugszeichen

| | |
|---|---|
| 1 | zu schützendes Objekt |
| 2 | mobiles Endgerät |
| 3 | zentrale Rechnereinheit |
| 4 | steuernde Empfangseinheit |
| 5 | mobile Sendeeinheit |
| 6 | Verbindung |
| 7 | Verbindung |
| 8 | Rückkanal |
| 9 | Rückkanal |

## Patentansprüche

1. Identifikations- und/oder Schließsystem zum Identifizieren und/oder Freigeben eines technischen Systems umfassend:
eine zentrale Rechnereinheit (3), die geeignet ist, ein Signal zu erzeugen und zu senden,
zumindest eine mobile Sende-Empfangseinheit (5), die geeignet ist, das von der zentralen Rechnereinheit (3) gesendete Signal zu empfangen, zu speichern, zu ändern und das geänderte Signal drahtlos weiter zu senden,
zumindest eine steuernde Empfangseinheit (4), die geeignet ist, das von der mobilen Sende-Empfangseinheit (5) gesendete Signal drahtlos zu empfangen und zumindest eine Steuerfunktion in Abhängigkeit davon auszuführen,
wobei das Signal digitale Daten umfasst, die geeignet sind, die Ausführung der Steuerfunktion zu veranlassen,
**dadurch gekennzeichnet, dass**
das Signal ferner Informationen über eine für die Ausführung der Steuerfunktion zeitabhängige Gültigkeit der Daten umfasst.

2. Zentrale Rechnereinheit (3), die geeignet ist, ein Signal auf einem Vorwärtskanal an eine mobile Sende-Empfangseinheit (5) zu senden,
wobei das Signal digitale Daten umfasst, die geeignet sind, nach Weiterleitung von der mobilen Sende-Empfangseinheit (5) an eine steuernde Empfangseinheit (4) die Ausführung einer Steuerfunktion zu veranlassen,
**dadurch gekennzeichnet, dass**
das Signal enthählt ferner Informationen über eine für die Ausführung der Steuerfunktion zeitabhängige Gültigkeit der Daten umfasst. '

3. Zentrale Rechnereinheit (3) nach Anspruch 2, die geeignet ist, auf einem Rückkanal ein Signal von der mobilen Sende-Empfangseinheit (5) zu empfangen.

4. Mobile Sende-Empfangseinheit (5), die geeignet ist, ein Signal enthählt von einer zentralen Rechnereinheit (3) zu empfangen, zu speichern, zu ändern und auf einem Vorwärtskanal drahtlos an eine steuernde Empfangseinheit (4) zu senden, wobei das Signal digitale Daten umfasst, die geeignet sind, die Ausführung einer Steuerfunktion zu veranlassen,
**dadurch gekennzeichnet, dass**
das Signal enthählt ferner Informationen über eine für die Ausführung der Steuerfunktion zeitabhängige Gültigkeit der Daten umfasst.

5. Mobile Sende-Empfangseinheit (5) nach Anspruch 4, die geeignet ist, auf einem ersten Rückkanal von der steuernden Empfangseinheit (4) ein Signal zu empfangen.

6. Mobile Sende-Empfangseinheit (5) nach Anspruch 4, die geeignet ist, auf einem zweiten Rückkanal ein Signal zu der zentralen Rechnereinheit (3) zu senden.

7. Mobile Sende-Empfangseinheit (5) nach Anspruch 4, **dadurch gekennzeichnet, dass** das empfangene Signal einen Code enthält, der zur Authentifizierung der mobilen Sende-Empfangseinheit (5) verwendet werden kann.

8. Steuernde Empfangseinheit (4), die geeignet ist, ein Signal zu empfangen, das von einer zentralen Rechnereinheit (3) erzeugt worden ist und von einer mobilen Sende-Empfangseinheit (5) weitergeleitet worden ist, und zumindest eine Steuerfunktion in Abhängigkeit davon auszuführen,
wobei das Signal digitale Daten umfasst, die geeignet sind, die Ausführung der Steuerfunktion zu veranlassen,
**dadurch gekennzeichnet, dass**
das Signal enthählt ferner Informationen über eine für die Ausführung der Steuerfunktion zeitabhängige Gültigkeit der Daten umfasst.

9. Steuernde Empfangseinheit (4) nach Anspruch 8, die geeignet ist, auf einem Rückkanal ein Signal zu der mobilen Sende-Empfangseinheit (5) zu senden.

10. Steuernde Empfangseinheit (4) nach Anspruch 8 oder 9, **dadurch gekennzeichnet, dass** sie zur Integration in einem Fahrzeug (1) geeignet ist und die Steuerfunktion der steuernden Empfangseinheit (4) geeignet ist, das Fahrzeug zu öffnen und / oder in Betrieb zu setzen und /oder benutzerspezifische Einstellungen festzulegen.

11. Steuernde Empfangseinheit (4) nach Anspruch 10, **dadurch gekennzeichnet, dass** die ausgeführte Steuerfunktion eine Entriegelung oder Verriegelung der Fahrzeugtüren, eine Freigabe oder Sperrung des Zündschlosses, eine Freigabe oder Sperrung einer Lenkradsperre, eine Freigabe oder Sperrung einer Wegfahrsperre und/oder eine Freigabe oder Sperrung eines Motorsteuergerätes ist.

12. Steuernde Empfangseinheit (4) nach Anspruch 11, **dadurch gekennzeichnet, dass** das Ausführen von zumindest einer Steuerfunktion ein Festlegen von individuellen Einstellungen am Fahrzeug (1) bewirkt.

13. Steuernde Empfangseinheit (4) nach Anspruch 8 oder 9, **dadurch gekennzeichnet, dass** sie zur Integration in einem Gebäude (1) geeignet ist und die Steuerfunktion der steuernden Empfangseinheit (4) geeignet ist Zugang zu dem Gebäude (1) zu gewähren.

14. Verfahren zum Betreiben einer zentralen Rechnereinheit (3) nach Anspruch 2 oder 3.

15. Verfahren zum Betreiben einer Sende-Empfangseinheit (5) nach einem der Ansprüche 4 bis 7.

16. Verfahren zum Betreiben einer steuernden Empfangseinheit (4) nach einem der Ansprüche 8 bis 13.

17. Computerprogramm zum Durchführen des Verfahrens nach einem der Ansprüche 14 bis 16.

## Claims

1. An identification and/or locking system for identifying and/or unblocking a technical system comprising:
a central computing unit (3) operable to generate and transmit a signal,
at least one mobile transceiver unit (5) operable to receive, store and modify the signal transmitted from the central computing unit (3) and to retransmit wirelessly the modified signal,
at least one control receiving unit (4) operable to receive wirelessly the signal transmitted from the mobile transceiver unit (5) and to execute at least one control function based thereon,
wherein the signal comprises digital data operable to trigger the execution of the control function,
**characterized in that**
the signal further comprises information concerning a time-dependent validity of the data for the execution of the control function.

2. A central computing unit (3) operable to transmit a signal on a forward channel to a mobile transceiver unit (5),
wherein the signal comprises digital data operable to trigger the execution of a control function after being forwarded from the mobile transceiver unit (5) to a control receiving unit (4),
**characterized in that**
the signal further comprises information concerning a time-dependent validity of the data for the execution of the control function.

3. The central computing unit (3) according to claim 2, operable to receive a signal from the mobile transceiver unit (5) on a reverse channel.

4. A mobile transceiver unit (5) operable to receive, store and modify a signal from a central computing unit (3) and to transmit it on a forward channel wirelessly to a control receiving unit (4), wherein the signal comprises digital data operable to trigger the execution of a control function,
**characterized in that**
the signal further comprises information concerning a time-dependent validity of the data for the execution of the control function.

5. The mobile transceiver unit (5) according to claim 4, operable to receive a signal from the control receiving unit (4) on a first reverse channel.

6. The mobile transceiver unit (5) according to claim 4, operable to transmit a signal to the central computing unit (3) on a second reverse channel.

7. The mobile transceiver unit (5) according to claim 4, **characterized in that** the received signal comprises a code, which can be used to authenticate the mobile transceiver unit (5).

8. A control receiving unit (4) operable to receive a signal which was generated by a central computing unit (3) and which was forwarded from a mobile transceiver unit (5), and to execute at least one control function depending thereon,
wherein the signal comprises digital data operable to trigger the execution of the control function,
**characterized in that**
the signal further comprises information concerning a time-dependent validity of the data for the execution of the control function.

9. The control receiving unit (4) according to claim 8, operable to transmit a signal to the mobile transceiver unit (5) on a reverse channel.

10. The control receiving unit (4) according to claim 8 or 9, **characterized in that** it is operable for being integrated in a motorcar (1) and wherein the control function of the control receiving unit (4) is operable to open and/or start the motorcar and/or to set user specific settings.

11. The control receiving unit (4) according to claim 10, **characterized in that** the executed control function is an unlocking or locking of the motorcar doors, an unblocking or blocking of the ignition lock, an unblocking or blocking of a steering wheel lock, an unblocking or blocking of an immobilizer and/or an unblocking or blocking of an engine control device.

12. The control receiving unit (4) according to claim 11, **characterized in that** the execution of at least one control function causes a setting of individual settings at the motorcar (1).

13. The control receiving unit (4) according to claim 8 or 9, **characterized in that** it is operable for being integrated in a building (1) and wherein the control function of the control receiving unit (4) is operable to allow access to the building (1).

14. A method for operating a central computing unit (3) according to claim 2 or 3.

15. A method for operating a transceiver unit (5) according to any of the claims 4 to 7.

16. A method for operating a control receiving unit (4) according to any of the claims 8 to 13.

17. A computer program for executing the method according to any of the claims 14 to 16.

## Revendications

1. Système d'identification et/ou de fermeture pour l'identification et/ou le déblocage d'un système technique, comprenant :
une unité centrale de calcul (3) qui est apte à générer et émettre un signal,
au moins une unité d'émission-réception mobile (5) qui est apte à recevoir, mémoriser, modifier le signal émis par l'unité centrale de calcul (3) et à réémettre sans fil le signal modifié,
au moins une unité de réception de commande (4) qui est apte à recevoir sans fil le signal émis par l'unité d'émission-réception mobile (5) et à exécuter au moins une fonction de commande en fonction de celui-ci,
le signal comprenant des données numériques qui sont aptes à déclencher l'exécution d'une fonction de commande,
**caractérisé en ce que**
le signal comprend en outre des informations sur une validité des données en fonction du temps pour l'exécution de la fonction de commande.

2. Unité centrale de calcul (3) qui est apte à émettre un signal vers une unité d'émission-réception mobile (5) sur une voie d'aller,
le signal comprenant des données numériques qui sont aptes, après retransmission par l'unité d'émission-réception mobile (5) à une unité de réception de commande (4), à déclencher l'exécution d'une fonction de commande,
**caractérisée en ce que**
le signal comprend en outre des informations sur une validité des données en fonction du temps pour l'exécution de la fonction de commande.

3. Unité centrale de calcul (3) selon la revendication 2, qui est apte à recevoir un signal de l'unité d'émission-réception mobile (5) sur une voie de retour.

4. Unité d'émission-réception mobile (5), qui est apte à recevoir, mémoriser, modifier un signal d'une unité centrale de calcul (3) et à l'émettre sans fil vers une unité de réception de commande (4) sur une voie d'aller, le signal comprenant des données numériques qui sont aptes à déclencher l'exécution d'une fonction de commande,
**caractérisée en ce que**
le signal comprend en outre des informations sur une validité des données en fonction du temps pour l'exécution de la fonction de commande.

5. Unité d'émission-réception mobile (5) selon la revendication 4, qui est apte à recevoir un signal de l'unité de réception de commande (4) sur une première voie de retour.

6. Unité d'émission-réception mobile (5) selon la revendication 4, qui est apte à émettre un signal vers l'unité centrale de calcul (3) sur une deuxième voie de retour.

7. Unité d'émission-réception mobile (5) selon la revendication 4, **caractérisée en ce que** le signal reçu contient un code qui peut être utilisé pour authentifier l'unité d'émission-réception mobile (5).

8. Unité de réception de commande (4), qui est apte à recevoir un signal qui a été généré par une unité centrale de calcul (3) et retransmis par une unité d'émission-réception mobile (5), et à exécuter au moins une fonction de commande en fonction de celui-ci,
le signal comprenant des données numériques qui sont aptes à déclencher l'exécution de la fonction de commande,
**caractérisée en ce que**
le signal comprend en outre des informations sur une validité des données en fonction du temps pour l'exécution de la fonction de commande.

9. Unité de réception de commande (4) selon la revendication 8, qui est apte à émettre un signal à l'unité d'émission-réception mobile (5) sur une voie de retour.

10. Unité de réception de commande (4) selon la revendication 8 ou 9, **caractérisée en ce qu'**elle est apte à être intégrée dans un véhicule (1) et que la fonction de commande de l'unité de réception de commande (4) est apte à ouvrir et/ou mettre en service le véhicule et/ou à définir des réglages spécifiques à l'utilisateur.

11. Unité de réception de commande (4) selon la revendication 10, **caractérisée en ce que** la fonction de commande exécutée est un déverrouillage ou un verrouillage des portes du véhicule, un déblocage ou un blocage de la serrure de contact, un déblocage ou un blocage d'un dispositif antivol de direction, un déblocage ou un blocage d'un dispositif antidémarrage et/ou un déblocage ou un blocage d'un module de gestion de moteur.

12. Unité de réception de commande (4) selon la revendication 11, **caractérisée en ce que** l'exécution d'au moins une fonction de commande entraîne une définition de réglages individuels sur le véhicule (1).

13. Unité de réception de commande (4) selon la revendication 8 ou 9, **caractérisée en ce qu'**elle est apte à être intégrée dans un bâtiment (1) et que la fonction de commande de l'unité de réception de commande (4) est apte à permettre l'accès au bâtiment (1).

14. Procédé de fonctionnement d'une unité centrale de calcul (3) selon la revendication 2 ou 3.

15. Procédé de fonctionnement d'une unité d'émission-réception (5) selon une des revendications 4 à 7.

16. Procédé de fonctionnement d'une unité de réception de commande (4) selon une des revendications 8 à 13.

17. Programme d'ordinateur pour réaliser le procédé selon une des revendications 14 à 16.
